# EUROPÄISCHE PATENTSCHRIFT

(11) **EP 3 221 082 B1**
(45) Veröffentlichungstag und Bekanntmachung des Hinweises auf die Patenterteilung: **22.06.2022**
(21) Anmeldenummer: 15812962.7
(22) Anmeldetag: 18.11.2015
(51) Int. Cl.: B23Q 1/00, B23Q 1/70, B23Q 17/12

(54) **SPINDELVORRICHTUNG UND WERKZEUGMASCHINE MIT SPINDELVORRICHTUNG**
SPINDLE DEVICE AND MACHINE TOOL HAVING A SPINDLE DEVICE
ENSEMBLE BROCHE ET MACHINE-OUTIL COMPRENANT UN ENSEMBLE BROCHE

(30) Priorität: 18.11.2014 DE 102014223544
(43) Veröffentlichungstag der Anmeldung: 27.09.2017
(73) Patentinhaber: DMG MORI Ultrasonic Lasertec GmbH, 55758 Stipshausen (DE)
(72) Erfinder: FEUCHT, Florian, 73453 Abtsgmünd (DE); KETELAER, Jens, 65205 Wiesbaden (DE); PRAETORIUS, Manuel, 55624 Rhaunen (DE); SCHWENK, Gaston, 55468 Simmern (DE)
(74) Vertreter: MERH-IP Matias Erny Reichl Hoffmann Patentanwälte PartG mbB
(86) Internationale Anmeldenummer: PCT/EP2015/077011
(87) Internationale Veröffentlichungsnummer: WO 2016/079203

(56) Entgegenhaltungen:
- WO-A1-03/089188
- DE-A1- 4 201 013
- JP-A- 2011 131 343
- US-A- 5 770 936

## Beschreibung

Die vorliegende Erfindung betrifft eine Spindelvorrichtung mit werkzeugaufnahmeseitigem, zusätzlichem elektrischen Verbraucher und eine Werkzeugmaschine mit einer derartigen Spindelvorrichtung bzw. bevorzugt eine mobile Werkzeugmaschine bzw. mobile Fräsmaschine mit einer derartigen Spindelvorrichtung zur Bearbeitung von Werkstücken, insbesondere zum Bearbeiten von Oberflächen großer Werkstücke oder Composite-Bauteile.

### Hintergrund der Erfindung

Spindelvorrichtungen sind z.B. aus WO 2006/002675 A1 oder EP 0 719 199 A1 bekannt. Hierbei werden gemäß dem genannten Stand der Technik an einer Spindelvorrichtung zum Einsatz an einer Werkzeugmaschine an einem Werkzeugkopf zur Aufnahme eines Werkzeugs elektrische Verbraucher (wie z.B. eine Vibrationseinrichtung oder elektronische Messeinrichtungen) vorgesehen, die mittels einer Spulenkonfiguration mit einer ortsfesten Sendespule und einer rotierbar gelagerten Empfängerspule mit elektrischer Energie versorgt werden können, wenn das Werkzeug an der Spindelvorrichtung rotierend angetrieben wird.

Jedoch ergibt sich an den Spindelvorrichtungen gemäß dem genannten Stand der Technik unter anderem der Nachteil, dass die Spulenkonfiguration mit der ortsfesten Sendespule und der rotierbar gelagerten Empfängerspule an dem werkzeugseitigen Werkzeugkopf zu einem unzweckmäßig unhandlichen, raumgreifenden, sperrigen Aufbau führt, der insbesondere Werkzeugwechsel an der Spindelvorrichtung erschwert.

Um den Werkzeugwechsel zu erleichtern wird gemäß der EP 0 719 199 A1 vorgeschlagen, zumindest eine der Spulen der Spulenkonfiguration nur kreissegmentförmig auszugestalten, wodurch zwar der Werkzeugwechsel erleichtert werden kann, allerdings mit dem daraus resultierenden Nachteil, dass der Wirkungsgrad der Energieübertragung zwischen den Spulen nachteilig verschlechtert wird.

Ferner ist aus der WO 03/089188 A1 eine Maschinenanpassung bekannt, bei der auf verschiedenen Wegen Energie und Daten von einem stationären Teil der Spindel auf ein in der Spindel aufgenommenes Werkzeug kontaktbehaftet oder kontaktlos übertragen werden.

Zudem ist aus der JP 2011 - 131343 A, worauf der Oberbegriff des Anspruchs 1 basiert, eine Bearbeitungseinrichtung mit einem Ultraschall-Schwingungserzeuger bekannt, wobei der Ultraschall-Schwingungserzeuger an einem von der Spindel aufgenommenen Werkzeughalter zum Halten des Bearbeitungswerkzeugs vorgesehen ist.

Im Hinblick auf die vorstehend genannten Nachteile ist es ausgehend von dem vorstehend genannten Stand der Technik eine Aufgabe der vorliegenden Erfindung, eine Spindelvorrichtung mit werkzeugaufnahmeseitigem, zusätzlichem elektrischen Verbraucher bereitzustellen, die einen einfachen und kompakten Aufbau ermöglicht. Des Weiteren ist es ausgehend von dem vorstehend genannten Stand der Technik eine Aufgabe der vorliegenden Erfindung, eine Spindelvorrichtung mit werkzeugaufnahmeseitigem, zusätzlichem elektrischen Verbraucher bereitzustellen, die einfach und effizient Werkzeugwechsel ermöglicht, bevorzugt ohne Einbußen im Wirkungsgrad der Energieübertragung zwischen den Spulen in Kauf nehmen zu müssen.

### Zusammenfassung

Zur Lösung der vorstehend genannten Aufgaben wird eine Spindelvorrichtung gemäß Anspruch 1 und eine Werkzeugmaschine, insbesondere eine mobile Werkzeugmaschine, gemäß Anspruch 14 vorgeschlagen. Abhängige Ansprüche betreffen bevorzugte Ausführungsbeispiele der Erfindung.

Gemäß einem ersten Aspekt der Erfindung wird eine Spindelvorrichtung vorgeschlagen, mit einer Werkzeugaufnahme zur Aufnahme eines Werkzeugs oder einer werkzeugaufnehmenden Werkzeugschnittstelle, einem Spindelantrieb umfassend einen Spindelrotor zum rotatorischen Antreiben der Werkzeugaufnahme, zumindest einem elektrischen Verbraucher, der auf der der Werkzeugaufnahme zugewandten Seite des Spindelrotors angeordnet ist, und/oder einer Spuleneinheit zur elektrischen Energieversorgung des zumindest einen elektrischen Verbrauchers. Die Spuleneinheit ist erfindungsgemäß auf der der Werkzeugaufnahme abgewandten Seite des Spindelrotors angeordnet. Zudem weist der elektrische Verbraucher eine drehfest an der Werkzeugaufnahme angebrachte Vibrationseinheit auf, die dazu eingerichtet ist, eine Vibration der Werkzeugaufnahme in axialer Richtung der Spindelvorrichtung anzutreiben (z.B. mittels einer axialen Schwinger-Einheit), eine Vibration der Werkzeugaufnahme in einer oder mehrerer radialer Richtungen der Spindelvorrichtung anzutreiben (z.B. mittels einer oder mehrerer radialer Schwinger-Einheiten) und/oder eine Vibration der Werkzeugaufnahme in Drehrichtung der Spindel (z.B. mittels einer Rotationsschwinger-Einheit) anzutreiben.

Hierbei liegt der Erfindung die Idee zugrunde, den platzraubenden und umständlichen Aufbau eines Werkzeugkopfs mit einer Spuleneinheit an der Seite der Werkzeugaufnahme zusätzlich zu dem elektrischen Verbraucher zu vermeiden, und stattdessen die Spuleneinheit für die elektrische Energieversorgung des elektrischen Verbrauchers der Spindelvorrichtung auf der der Werkzeugaufnahme abgewandten Seite des Spindelrotors anzuordnen.

Dies bietet einerseits die Vorteile, dass der Aufbau der Spindelvorrichtung einfacher, kompakter und weniger wartungsanfällig bereitgestellt werden kann, ohne ein Auswechseln des Werkzeugs an der Werkzeugaufnahme bzw. der Werkzeugschnittstelle zu erschweren, und andererseits können die Spulen der Spuleneinheit auf der abgewandten Seite des Spindelrotors ohne Einschränkungen vollumfänglich bereitgestellt werden, so dass keine Einbußen im Wirkungsgrad der Energieübertragung zwischen den Spulen in Kauf genommen werden müssen.

Zudem können die Spulen der Spuleneinheit im Gegensatz zum Stand der Technik im Inneren des Spindelgehäuses angeordnet werden, so dass die Spuleneinheit deutlich besser als im Stand der Technik vor Beschädigungen und Verschmutzung geschützt werden können.

In zweckmäßigen Ausführungsbeispielen weist die Spuleneinheit vorzugsweise eine feststehende Sendespule und/oder eine rotierbar gelagerte Empfängerspule auf, insbesondere bevorzugt mit einem zwischen der Sendespule und der Empfängerspule liegenden Spalt zur berührungsglosen Energieübertragung.

In bevorzugten zweckmäßigen Ausführungsbeispielen sind die Sendespule und/oder die Empfängerspule vorzugsweise als vollumfängliche Spule ausgebildet, wodurch vorteilhaft ein sehr hoher Wirkungsgrad der Energieübertragung zwischen den Spulen ermöglicht werden kann, insbesondere wenn beide Spulen jeweils als vollumfängliche Spule ausgebildet sind.

Unter dem Begriff "vollumfängliche Spule" wird hierbei verstanden, dass die Spulenleitungen im Spulenquerschnitt im vollen Umfang geleitet sind und die Spule nicht nur als Kreissegment einer Spule bzw. Teilspule ausgebildet ist. Der Querschnitt einer "vollumfängliche Spule" ist bevorzugt im Wesentlichen kreisförmig ausgebildet, jedoch ist die Erfindung nicht auf kreisförmige Spulenquerschnitte begrenzt und andere Spulenquerschnitte sind denkbar, z.B. oval, viereckig oder vieleckig, ggf. mit abgerundeten Ecken.

In zweckmäßigen Ausführungsbeispielen ist die rotierbar gelagerte Empfängerspule vorzugsweise auf der der Werkzeugaufnahme abgewandten Seite des Spindelrotors an einem Endabschnitt des Spindelrotors angebracht bzw. bevorzugt drehfest direkt oder indirekt an diesem befestigt. Bevorzugt rotiert die rotierbar gelagerte Empfängerspule mit dem rotierbaren Spindelrotor, wenn die Spindel der Spindelvorrichtung über den Spindelantrieb angetrieben wird.

In zweckmäßigen Ausführungsbeispielen ist die feststehende Sendespule vorzugsweise an einem den Spindelrotor aufnehmenden Spindelgehäuse angebracht bzw. bevorzugt direkt oder indirekt an dem Spindelgehäuse befestigt.

In zweckmäßigen Ausführungsbeispielen ist die Spuleneinheit vorzugsweise mittels elektrischer Leitungen mit dem elektrischen Verbraucher verbunden, insbesondere elektrisch verbunden. In bevorzugten zweckmäßigen Ausführungsbeispielen ist hierbei vorzugsweise zumindest ein Abschnitt der elektrischen Leitungen entlang einer Rotationsachse des Spindelrotors von einem Ende des Spindelrotors zum anderen Ende des Spindelrotors axial geführt.

In zweckmäßigen Ausführungsbeispielen weist der Spindelrotor vorzugsweise ein axial angeordnetes Hohlschaftelement auf, durch das der zumindest eine Abschnitt der elektrischen Leitungen entlang der Rotationsachse des Spindelrotors axial geführt ist.

In zweckmäßigen Ausführungsbeispielen weist der elektrische Verbraucher vorzugsweise eine elektronische Messvorrichtung auf, insbesondere z.B. eine optische Messvorrichtung z.B. mit einem Abtastlaser oder eine induktive Messvorrichtung, oder eine Ultraschall-Messvorrichtung.

In besonders bevorzugten zweckmäßigen Ausführungsbeispielen ist die Vibrationseinheit vorzugsweise dazu eingerichtet, eine Vibration der Werkzeugaufnahme mit einer Frequenz im Ultraschallbereich anzutreiben. Dies hat den Vorteil, dass insbesondere die Bearbeitung von Verbundwerkstoffen bzw. Composite-Bauteilen verbessert möglich ist, da die zusätzlich bereitgestellte Vibration des an der Werkzeugaufnahme direkt oder indirekt über eine Werkzeugschnittstelle aufgenommenen Werkzeugs in axialer, radialer und/oder Dreh-Richtung vorteilhaft zu einer stark verminderten bzw. vermiedenen Fransenbildung an den herausgearbeiteten Stellen des bearbeiteten Werkstücks führt.

In zweckmäßigen Ausführungsbeispielen weist die Vibrationseinheit einen Piezoaktuator auf bzw. weist die Vibrationseinheit eine Mehrzahl Piezoaktuatoren auf, wobei zumindest manche bzw. alle der mehreren Piezoaktuatoren in bevorzugten Ausführungsbeispielen in axialer Richtung hintereinander angeordnet sind.

In zweckmäßigen Ausführungsbeispielen ist die Vibrationseinheit bevorzugt direkt oder indirekt an der Werkzeugaufnahme bzw. einem dem Spindelrotor zugewandten Abschnitt der Werkzeugaufnahme angebracht oder befestigt.

In zweckmäßigen Ausführungsbeispielen ist die Werkzeugaufnahme über eine Labyrinth-Kopplung mit dem Spindelrotor verbunden. Dies ermöglicht insbesondere in Ausführungsbeispielen mit Vibrationseinheit oder Piezoantrieb zum Antreiben einer Vibration der Werkzeugaufnahme den Vorteil, dass die Werkzeugaufnahme mit dem Spindelrotor derart verbunden ist, dass eine Vibration der Werkzeugaufnahme in kleinen Amplituden möglich ist ohne direkte Übertragung der Vibration auf den Spindelrotor, wobei die Drehbewegung des Spindelrotor dennoch hervorragend und verlustfrei auf die Werkzeugaufnahme übertragen werden kann.

In zweckmäßigen Ausführungsbeispielen ist die Werkzeugaufnahme dazu eingerichtet, direkt (d.h. ohne dazwischenliegende Werkzeugschnittstelle) ein Werkzeug aufzunehmen. Dies ermöglicht den Vorteil, dass die Spindelvorrichtung noch kompakter und äußerst vorteilhaft auch für kleinere bzw. mobile Werkzeugmaschinen bereitgestellt werden kann, da auf eine zusätzliche platzeinnehmende Werkzeugschnittstelle (wie z.B. eine Hohlschaftkegelschnittstelle oder eine Steilkegelschnittstelle) verzichtet wird.

In anderen zweckmäßigen Ausführungsbeispielen ist die Werkzeugaufnahme dazu eingerichtet ist, eine auswechselbare Werkzeugschnittstelle aufzunehmen, insbesondere eine Hohlschaftkegel-Werkzeugschnittstelle oder eine Steilkegelschnittstelle. Dies hat den Vorteil, dass der kompakte und zuverlässige Aufbau der Spindelvorrichtung auch verwendet werden kann, wenn auswechselbare Werkzeugschnittstellen vorgesehen sind, die dennoch einen einfachen Werkzeugwechsel ermöglichen, da anders als im Stand der Technik der EP 0 719 199 A1 keine Spule der Spuleneinheit an der Werkzeugschnittstelle angeordnet wird.

Gemäß einem zweiten Aspekt der Erfindung wird eine Werkzeugmaschine zum Bearbeiten eines Werkstücks mit einem Werkzeug vorgeschlagen, umfassend eine Spindelvorrichtung, insbesondere gemäß einem der vorhergehenden Aspekte oder Ausführungsbeispiele oder einer Kombination derselben, zum Antreiben des an der Werkzeugaufnahme der Spindelvorrichtung aufgenommenen Werkzeugs.

Zusammenfassend ermöglicht es die vorliegende Erfindung vorteilhaft, eine Spindelvorrichtung bereitzustellen, die einen einfachen und kompakten Aufbau ermöglicht und des Weiteren einfach und effizient Werkzeugwechsel ermöglicht, bevorzugt ohne Einbußen im Wirkungsgrad der Energieübertragung zwischen den Spulen in Kauf nehmen zu müssen.

Aspekte der vorliegenden Erfindung werden im Folgenden exemplarisch mit Bezug auf die beigefügten, schematischen Zeichnungen beschrieben.

### Kurzbeschreibung der Figuren

Es zeigen:
Fig. 1A eine schematische Perspektivansicht einer Werkzeugmaschine von schräg oben,
Fig. 1B eine schematische Frontansicht der Werkzeugmaschine,
Fig. 1C eine schematische Seitenansicht der Werkzeugmaschine,
Fig. 1D eine schematische Perspektivansicht der Werkzeugmaschine von schräg unten,
Fig. 2 eine schematische Perspektivansicht einer Spindelvorrichtung gemäß einem Ausführungsbeispiel der vorliegenden Erfindung und
Fig. 3 eine schematische Schnittdarstellung der Spindelvorrichtung gemäß einem Ausführungsbeispiel der vorliegenden Erfindung.

### Detaillierte Beschreibung der Figuren und bevorzugter Ausführungsbeispiele der Erfindung

Im Folgenden werden Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

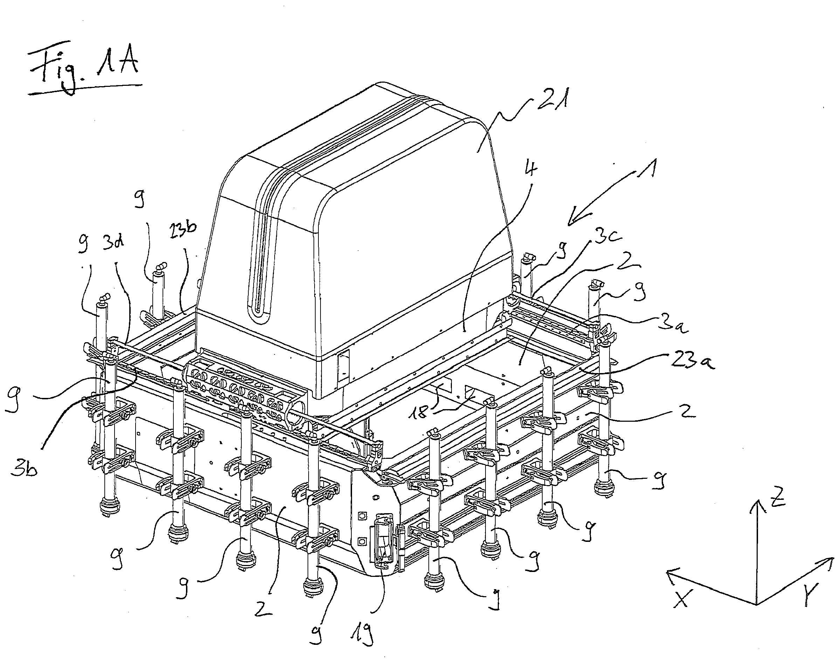

Figs. 1A bis 1D zeigen schematische Ansichten einer beispielhaften mobilen Werkzeugmaschine 1, die beispielhaft mit einer Spindelvorrichtung gemäß einem Ausführungsbeispiel ausgestattet ist.

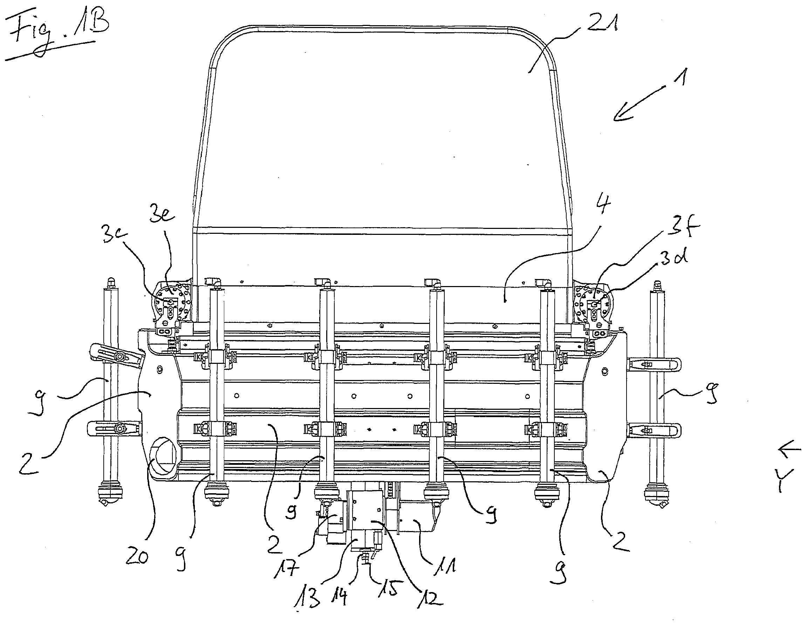

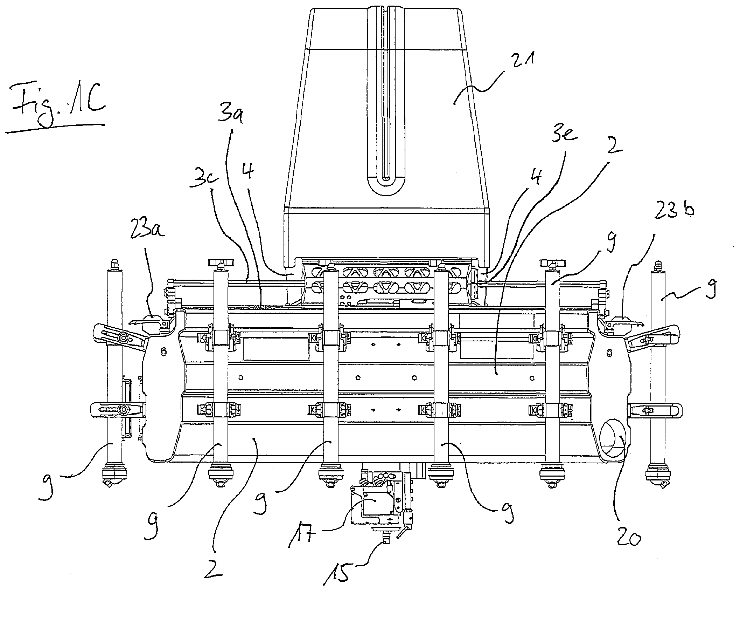

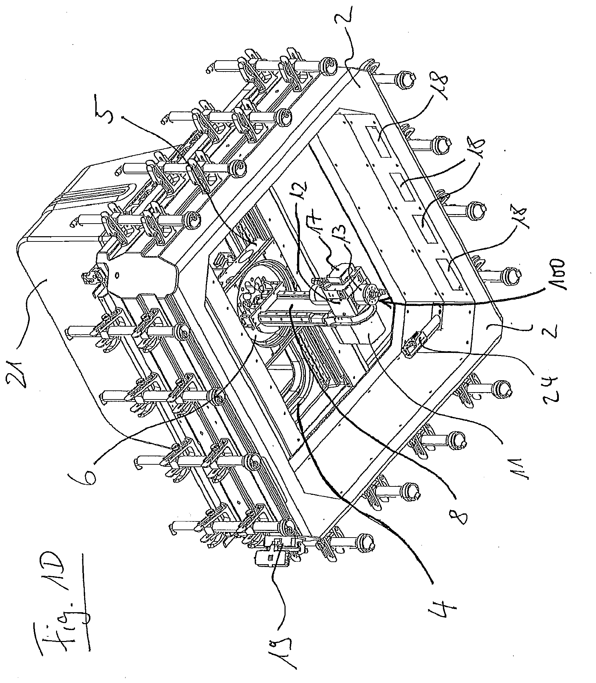

Fig. 1A zeigt eine schematische Perspektivansicht der Werkzeugmaschine 1 von schräg oben, Fig. 1B zeigt eine schematische Frontansicht der Werkzeugmaschine 1, Fig. 1C zeigt eine schematische Seitenansicht der Werkzeugmaschine 1 und Fig. 1D zeigt eine schematische Perspektivansicht der Werkzeugmaschine 1 von schräg unten.

Als Grundgestell umfasst die Werkzeugmaschine 1 einen beispielhaft rechtwinklig bzw. im Wesentlichen quadratisch ausgebildeten Rahmen, welcher beispielhaft aus einem monolithisch ausgebildeten Rahmenelement 2 aus einem faserverstärktem Kunststoff, insbesondere aus einem kohlenstofffaserverstärktem Kunststoff, gebildet ist, auf dem ggf. in Ausführungsbeispielen weitere Elemente angebracht sein können wie z.B. angebrachte Abdeckplatten oder ähnliches. Bevorzugt beträgt die Rahmenbreite und/oder die Rahmenlänge etwa 0,5 bis 1,5 m.

Im Inneren des Rahmenelements 2 weist die Werkzeugmaschine 1 einen Bearbeitungsraum auf, der vollumfänglich von dem monolithischen Rahmenelement 2 umschlossen ist. Auf zwei gegenüberliegenden Rahmenabschnitten der vier Rahmenabschnitte des Rahmenelements 2 sind sich in X-Richtung erstreckende Führungen 3a und 3b für eine steuerbare X-Linearachse (erste Linearachse) direkt auf den zwei gegenüberliegenden Rahmenabschnitten des Rahmenelements 2 abgebracht.

Ein in X-Richtung verfahrbarer X-Schlitten 4 wird von den Führungen 3a und 3b geführt. Vorzugsweise weist die X-Linearachse auf zumindest einem und bevorzugt auf jedem der beiden gegenüberliegenden Rahmenabschnitte an jeder der Führungen 3a und 3b ein jeweiliges Längenmesssystem auf, so dass die Position des X-Schlittens 4 der X-Linearachse auf einer und bevorzugt auf beiden Seiten bestimmbar ist.

Die X-Linearachse weist beispielhaft auf beiden Seiten des X-Schlittens einen jeweiligen Schraubantrieb mit einer jeweiligen Schraubenwelle 3c bzw. 3d auf. Auf den Schraubenwellen 3c und 3d werden Antriebe 3e und 3f gehalten, die an dem X-Schlitten 4 seitlich angebracht bzw. angeordnet sind. Die Antriebe 3e und 3f sind dazu eingerichtet, den X-Schlitten 4 entlang der Schraubenwellen 3c und 3d in der X-Richtung zu verfahren.

Der X-Schlitten 4 ist folglich in der X-Richtung mittels Ansteuerung der X-Linearachse verfahrbar an den Führungen 3a und 3b auf dem Rahmenelement 2 des Werkzeugmaschinenrahmens geführt und weist ein monolithisch ausgebildetes Rahmenelement auf, das beispielhaft aus einem faserverstärktem Kunststoff, insbesondere aus einem kohlenstofffaserverstärktem Kunststoff, gebildet ist.

An den Außenseiten des Rahmenelements 2 des Rahmens der Werkzeugmaschine sind an jedem der vier Rahmenabschnitte jeweils vier Fußelemente 9 angeordnet. Die Fußelemente dienen dazu, die Werkzeugmaschine 1 auf einer Oberfläche aufzustellen, wie z.B. auf einer Oberfläche eines großflächigen Werkstücks.

In den Figs. 1 bis 5 ist beispielhaft ein Haubenelement 21 (Abdeckungselement, bzw. Abdeckung, ggf. aus Kunststoff) auf dem X-Schlitten 4 angebracht bzw. angeordnet, um die darunterliegenden Bauteile abzudecken bzw. zu schützen. Des Weiteren ergibt sich durch das Haubenelement 21 ein Eingriffsschutz für Bediener der Werkzeugmaschine 1. Jedoch ist es auch möglich, Ausführungsbeispiele ohne Haubenelement 21 vorzusehen.

Das Rahmenelement des X-Schlittens 4 weist zwei Querträger 4a und 4b auf, die sich jeweils von der Führung 3a auf einem Rahmenabschnitt des Rahmenelements 2 zu dem gegenüberliegenden Rahmenabschnitt des Rahmenelements 2 und der Führung 3b erstrecken.

Auf der Unterseite des X-Schlittens 4 ist ein Y-Schlitten 5 einer Y-Linearachse (zweite Linearachse) gehalten, der mittels eines nicht gezeigten Antriebs in der Y-Richtung verfahren werden kann. Beispielhaft ist die X-Richtung orthogonal zu der Y-Richtung, und die Unterseiten der Querträger 4a und 4b des X-Schlittens 4 weisen jeweilige in Y-Richtung ausgerichtete Führungen (nicht gezeigt) auf, an denen der Y-Schlitten 5 der Y-Linearachse geführt ist.

Der Y-Schlitten 5 ist in der Y-Richtung mittels der Y-Linearachse verfahrbar auf den Führungen auf der Unterseite des Rahmenelements 4 des X-Schlittens verfahrbar geführt (siehe Fig. 1D) und weist ein monolithisch ausgebildetes Rahmenelement auf, das beispielhaft aus einem faserverstärktem Kunststoff, insbesondere aus einem kohlenstoff-faserverstärktem Kunststoff, gebildet ist.

In dieser bevorzugten Ausführungsform sind der X- und der Y-Schlitten jeweils aus einem faserverstärktem Kunststoff gebildet bzw. umfasst ein jeweiliges Rahmenelement aus einem faserverstärktem Kunststoff. In weiteren Ausführungsbeispielen ist es natürlich möglich, einen oder beide dieser Schlitten bzw. deren Rahmenelemente aus einem anderen Material auszubilden, z.B. aus Metall, bevorzugt beispielsweise Aluminium aus Gewichtsgründen.

Mittig am Y-Schlitten 5 der Y-Linearachse ist ein Turmelement 6 gehalten, das sich in einer Z-Richtung erstreckt, welche sich beispielhaft orthogonal zu den X- und Y-Richtungen der X- und Y-Linearachsen erstreckt.

Ein rotatorischer Direktantrieb (nicht gezeigt) ist an dem Y-Schlitten 5 der Y-Linearachse angeordnet und ist dazu eingerichtet, das Turmelement 6 um eine Rotationsachse zu drehend anzutreiben (zweite Drehachse, bevorzugt mindestens 360°-Steuerbarkeit), die parallel zur Z-Richtung ausgerichtet ist.

Im Inneren des beispielhaft hohl ausgebildeten Turmelements 6 ist ein Z-Schlitten 8 einer Z-Linearachse (dritte Linearachse) angeordnet, der über einen weiteren Linearantrieb in Z-Richtung verfahrbar ist.

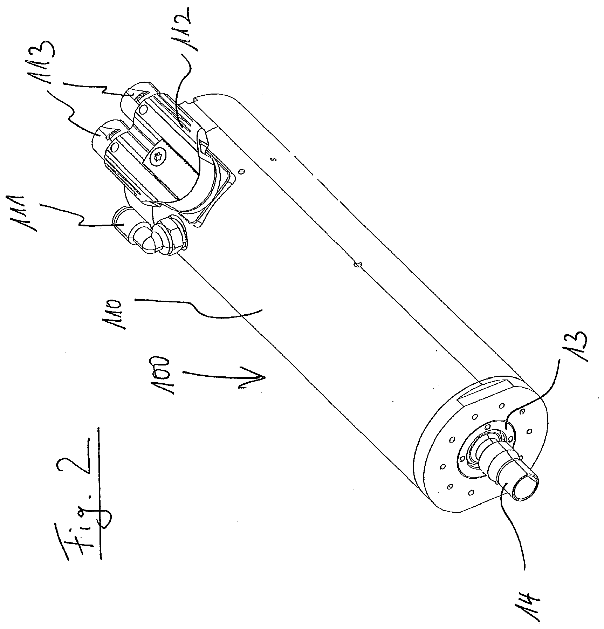

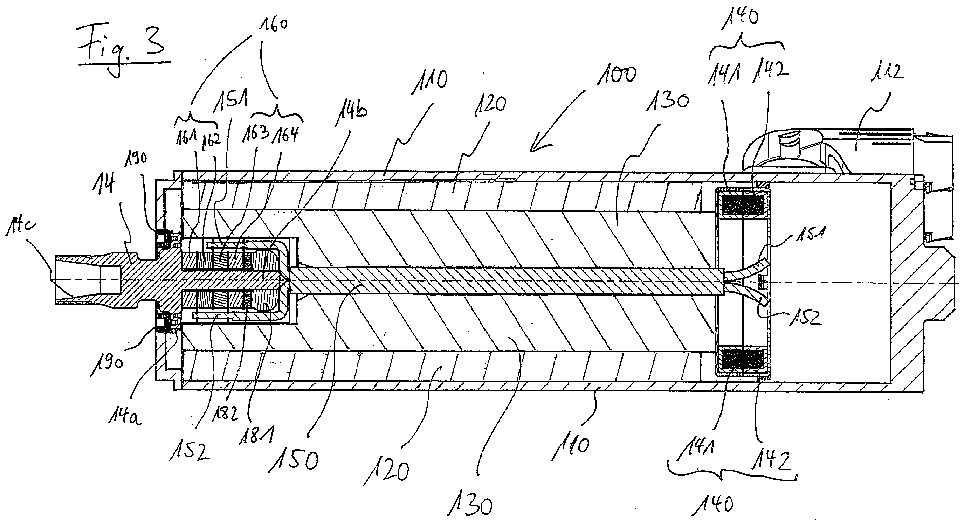

An dem unteren Ende des Z-Schlittens 8 ist eine Spindelvorrichtung mit einem Bearbeitungselement 12 angeordnet (z.B. Bearbeitungskopf, bzw. z.B. Fräskopf), siehe z.B. Fig. 1D. Das Bearbeitungselement 12 bzw. die Spindelvorrichtung hat eine Werkzeugspindel 13 mit einer Werkzeugaufnahme 14, an der beispielhaft ein Fräswerkzeug 15 zur Bearbeitung eines Werkstücks aufgenommen ist. Im Spindelgehäuse der Spindel 13 ist ein Spindelantrieb zum Antreiben der Spindel angeordnet. Die Spindelvorrichtung und deren beispielhafter Aufbau wird weiter unten in Bezug auf Figs. 2 und 3 beschrieben.

Es kann in bevorzugten Ausführungsbeispielen der Erfindung zusätzlich ein Piezo-Aktor (als elektrischer Verbraucher) oder ein ähnlicher Vibrationsantrieb (elektrischer Verbraucher) bereitgestellt werden, um bei dem Werkzeug zusätzlich eine Vibrationsbewegung anzutreiben, bei der das Werkzeug in Richtung der Spindelachse vibriert. Dies ist insbesondere bei der Bearbeitung von Composite-Bauteilen und Oberflächen aus Faserverbundstoffen vorteilhaft, da eine Fransenbildung bzw. Ausfaserung auf der bearbeiteten Oberfläche vermieden werden kann.

Das Bearbeitungselement 12 bzw. die Spindelvorrichtung ist an dem unteren Ende des Z-Schlittens 8 angeordnet bzw. gehalten, der in das um die Z-Achse drehbare Turmelement 6 mit dem rotatorischen Direktantrieb an dem Y-Schlitten 5 hineinragt und am Turmelement 6 in Z-Richtung verfahrbar gehalten ist.

Am unteren Ende des Z-Schlittens 8 ist beispielhaft ein weiterer rotatorischer Direktantrieb 11 vorgesehen, der dazu eingerichtet ist, das Bearbeitungselement 12 mit der Spindel 13 um eine zur Z-Richtung beispielhaft senkrecht ausgerichtete Rotationsachse drehend anzutreiben (zweite Drehachse ggf. als Schwenkachse ausgebildet, bevorzugt mindestens 180°-Steuerbarkeit).

An einer Seite des Bearbeitungselements 12 ist beispielhaft eine Messeinrichtung 17 angebracht, die z.B. ein Lasermesssystem zum Vermessen der Oberfläche des Werkstücks bzw. zum Ermitteln einer Position der Werkzeugmaschine 1 relativ zu dem Werkstück und/oder andere nichtberührende Messsysteme zur Untersuchung der Oberfläche des Werkstücks aufweisen kann (z.B. ein optisches System mit Kamera und/oder ein Ultraschallmesssystem). Eine derartige Messeinrichtung (oder Teile einer derartigen Messeinrichtung) kann auch an der Innenseite des Rahmens 2 angeordnet sein. Weiterhin kann eine derartige Messeinrichtung in weiteren Ausführungsbeispielen auch als Teil der Spindelvorrichtung bereitgestellt werden im Sinne eines elektrischen Verbrauchers der Spindelvorrichtung.

Weiterhin umfasst die Werkzeugmaschine 1 in weiteren Ausführungsbeispielen bevorzugt ein Laser-Werkzeugvermessungssystem bzw. eine Laser-Werkzeugvermessungseinrichtung, die entweder an dem Bearbeitungselement 2 und/oder an der Innenseite des Rahmens 2 angeordnet sein kann, um ein an der Spindel 13 aufgenommenes Werkzeug 15 mittels eines Lasers zu vermessen, bzw. dessen Position zu vermessen. Beispielhaft ist in Fig. 1D eine optionale Laser-Werkzeugmesseinrichtung 24 an der Innenseite des Rahmens 2 angeordnet. Dies bietet die Möglichkeit der Vermessung z.B. von Werkzeuglärige und -durchmesser des an der Spindel 13 aufgenommenen Werkzeugs 15 durch den im Innenraum der Maschine an den Rahmen angebrachten Werkzeuglaser der Werkzeugmesseinrichtung 24.

Eine nicht dargestellte von dem Y-Schlitten 5 kommende Kabelzuführung kann mit dem Bearbeitungselement 12 verbunden werden und stellt dann die elektrische Stromversorgung für den Spindelantrieb, den Direktantrieb 11, den Piezo-Antrieb und/oder die Messeinrichtung 17 oder andere elektrische Verbraucher bereit. Zudem können über die Kabelzuführung 16 Steuersignale an den Spindelantrieb und den Direktantrieb 11 übermittelt werden und Sensorsignale aus der Messeinrichtung 17 ausgelesen werden.

Weitere Kabelführungen (z.B. für Aktorsignale, Sensorsignale oder die elektrische Stromversorgung) sind bevorzugt in Kabelkanälen geführt, die in bevorzugten Ausführungsbeispielen an den bzw. in dem monolithischen Rahmenelement 2 ausgebildet sind.

Beispielhaft ist in den Figs. 1A und 1D eine Schnittstellenöffnung 19 an einer Ecke des Rahmenelements 2 außen ausgebildet, als Ende von an dem bzw. in dem Rahmenelement 2 ausgebildeten Kabelführungskanälen nach innen z.B. direkt bzw. indirekt zu einem oder mehreren der Schlitten und der Antriebe an den Schlitten der Achsen.

Hierbei stellt die Werkzeugmaschine 1 weiterhin bevorzugt äußere, an dem Rahmenelement 2 angeordnete Anschüsse bereit, z.B. die bereits erwähnte Steuerungsschnittstelle 19 zum Anschluss einer Leistungsverbindung zur elektrischen Stromversorgung und/oder zum Anschluss einer Kommunikationsverbindung für Aktor und-/oder Sensorsignalübertragung von/zu einer externen Steuervorrichtung, und/oder auch einen Ansauganschluss 20 für eine externe Ansaugvorrichtung (ggf. bevorzugt über einer Verbindung interner Ansaugkanäle am bzw. im Rahmenelement 2 zu den Ansaugöffnungen 18).

Fig. 2 zeigt beispielhaft eine schematische Perspektivansicht einer Spindelvorrichtung 100 gemäß einem Ausführungsbeispiel der vorliegenden Erfindung.

Die Spindelvorrichtung 100 gemäß diesem Ausführungsbeispiel weist ein Spindelgehäuse 110 auf. Spindelseitig ist an dem Spindelgehäuse 110 eine um die Spindelachse rotierend antreibbare Werkzeugaufnahme 14 an der Spindel 13 angeordnet, die dazu eingerichtet ist ein Werkzeug (siehe Werkzeug 15 in Figs. 1A bis 1D) aufzunehmen.

In diesem Ausführungsbeispiel ist die Werkzeugaufnahme 14 beispielhaft derart ausgebildet, dass das mit der Spindel 13 bzw. dem später beschriebenen Spindelrotor drehfest verbundene Aufnahmeelement der Werkzeugaufnahme 14 dazu eingerichtet ist, ein Werkzeug wie z.B. ein Fräs- oder Bohrwerkzeug direkt (d.h. insbesondere ohne auswechselbare Werkzeugschnittstelle) aufzunehmen.

Dies ermöglicht es insbesondere vorteilhaft, die Spindelvorrichtung 100 besonders kompakt auszugestalten, so dass sich die Spindelvorrichtung 100 hervorragend für eine mobile Werkzeugmaschine eignet.

Jedoch ist die vorliegende Erfindung nicht auf Spindelvorrichtungen mit direkter Werkzeugaufnahme gemäß Figs. 2 und 3 beschränkt, sondern vielmehr können weitere bevorzugte und beispielhafte Ausführungsformen bereitgestellt werden, bei denen die Werkzeugaufnahme der Spindelvorrichtung dazu eingerichtet ist, eine auswechselbare Werkzeugschnittstelle aufzunehmen, d.h. insbesondere bevorzugt eine auswechselbare Hohlschaftkegel-Werkzeugschnittstelle oder auch eine auswechselbare Steilkegel-Werkzeugschnittstelle.

In dem Ausführungsbeispiel gemäß Figs. 2 und 3 weist das Spindelgehäuse 110 der Spindelvorrichtung 100 beispielhaft zusätzlich einen Pneumatik- oder Hydraulikanschluss 111 sowie ein Befestigungselement 112 auf, mit dem die Spindelvorrichtung 110 an dem Bearbeitungselement 12 bzw. dem Werkzeugkopf angebracht oder befestigt werden kann.

An dem Befestigungselement 112 sind zudem beispielhaft Anschlüsse 113 vorgesehen zum Anschluss einer oder mehrerer Kabelzuführungen für Sensorsignale und Aktuatorsignale (z.B. für den Spindelantrieb) sowie ggf. auch für Leistungskabel für die elektrische Energieversorgung des Spindelantriebs und/oder des elektrischen Verbrauchers der Spindelvorrichtung 100 (wie z.B. einer Messeinrichtung und/oder einer Vibrationseinheit bzw. einer Spuleneinheit).

Fig. 3 zeigt beispielhaft eine schematische Schnittdarstellung der Spindelvorrichtung 100 gemäß einem Ausführungsbeispiel der vorliegenden Erfindung.

Im Inneren des Spindelgehäuses 110 der Spindelvorrichtung 100 weist die Spindelvorrichtung 100 einen Spindelantrieb auf, der einen in einem Spindelstator 120 drehbar gelagerten Spindelrotor 130 aufweist.

Bei Antreiben der Spindel der Spindelvorrichtung 100 wird der Spindelrotor 130 rotatorisch angetrieben, in bevorzugten Ausführungsbeispielen auf Basis eines Elektromotors per elektromagnetischer Induktion. In weiteren Ausführungsbeispielen kann der Spindelrotor 130 jedoch auch indirekt über ein Getriebe mechanisch angetrieben werden (nicht gezeigt).

An einem Ende des Spindelrotors 130 ist die an einem Lagerelement 190 rotatorisch gelagerte Werkzeugaufnahme 14 angeordnet, die in diesem Ausführungsbeispiel beispielhaft als einteiliges Werkzeugaufnahmeelement ausgebildet ist, welches an einem mittleren Abschnitt eine Labyrinth-Kopplung 14a aufweist. Die Labyrinth-Kopplung erlaubt vorteilhaft eine Vibration der Werkzeugaufnahme 14 in axialer Richtung der Spindelvorrichtung 100 bzw. in Spindelachsrichtung.

Zudem weist die Werkzeugaufnahme 14 beispielhaft einen im Inneren des Spindelgehäuses 110 angeordneten Stiftabschnitt 14b auf (ggf. mit Gewinde). Ein Aufnahmeabschnitt 14c der Werkzeugaufnahme 14 ragt aus dem Spindelgehäuse 110 nach außen hervor und ist beispielhaft zur direkten Aufnahme eines Werkzeugs ausgebildet (d.h. beispielhaft ohne auswechselbare Hohlschaftkegel-Schnittstelle oder auswechselbare Teilkegel-Schnittstelle).

Jedoch ist die Erfindung nicht auf einteilige Werkzeugaufnahmeelemente beschränkt, und in weiteren Ausführungsbeispielen kann die Werkzeugaufnahme 14 auch mehrstückig bzw. mehrteilig ausgebildet sein.

Des Weiteren umfasst die Spindelvorrichtung 100 beispielhaft eine Vibrationseinheit 160 zum Antreiben einer Vibration (bzw. Schwingung oder Oszillation) der Werkzeugaufnahme 14.

Beispielhaft umfasst die Vibrationseinheit 160 in diesem Ausführungsbeispiel vier in axialer Richtung hintereinander angeordnete Piezo-Aktuatoren 161, 162, 163 und 164 bzw. Piezo-Aktoren eines Piezo-Antriebs, die jeweils umfänglich an dem Stiftabschnitt 14b der Werkzeugaufnahme 14 angeordnet sind.

Beispielhaft ist in dieser beispielhaften Ausführung eine Schwinger-Einheit vorgesehen, die eine Vibration in axialer Richtung antreiben kann. Die Erfindung ist jedoch nicht auf derartige axiale Schwinger-Einheiten eingeschränkt. Vielmehr ist es in weiteren beispielhaften Ausführungen alternativ oder auch zusätzlich möglich, eine Vibration der Werkzeugaufnahme in einer oder mehrerer radialer Richtungen der Spindelvorrichtung anzutreiben (z.B. mittels einer oder mehrerer radialer Schwinger-Einheiten) und/oder eine Vibration der Werkzeugaufnahme in Drehrichtung der Spindel anzutreiben (z.B. mittels einer Rotationsschwinger-Einheit).

Mittels einer Abstandsscheibe 182 und eines Befestigungselements 181 (z.B. als Mutterelement ausgebildet) sind die Piezo-Aktuatoren 161, 162, 163 und 164 der Vibrationseinheit 160 beispielhaft an der Werkzeugaufnahme 14 befestigt.

Zwischen den Piezo-Aktuatoren 161, 162, 163 und 164 sind beispielhaft jeweilige Kontaktplättchen angeordnet, über die die Piezo-Aktuatoren 161, 162, 163 und 164 jeweils mit elektrischen Leitungskontakten 151 und 152 elektrisch verbunden sind.

Im Inneren des Spindelrotors 130 weist die Spindelvorrichtung 100 ein axial angeordnetes Hohlschaftelement 150 auf, welches durch den Spindelrotor 130 von einem Ende bis zum anderen Ende des Spindelrotors 130 entlang der Rotationsachse des Spindelrotors 130 bzw. entlang der Spindelachse der Spindelvorrichtung 100 geführt ist und beispielhaft drehfest mit dem Spindelrotor 130 verbunden ist.

Die elektrischen Leitungskontakte 151 und 152 bzw. deren elektrische Leitungen (z.B. als einpolige Kabel oder als ein mehrpoliges Kabel) sind beispielhaft entlang der der Rotationsachse des Spindelrotors 130 bzw. entlang der Spindelachse der Spindelvorrichtung 100 durch das Hohlschaftelement 150 zur der Werkzeugaufnahme 14 abgewandten Seite des Spindelrotors 130 geführt.

Auf der der Werkzeugaufnahme 14 abgewandten Seite des Spindelrotors 130 ist weiterhin eine Spuleneinheit 140 angeordnet, die beispielhaft eine feststehende, mit dem Spindelgehäuse 110 verbundene bzw. an dem Spindelgehäuse 110 angebrachte Sendespule 142 und eine rotatorisch gelagerte, mit dem Spindelrotor 130 drehfest verbundene Empfängerspule 141 umfasst.

Zwischen der Sendespule 142 und der Empfängerspule 141 ist ein dünner, in Fig. 3 nicht gezeigter Spalt bzw. Luftspalt vorgesehen, derart, dass eine berührungslose elektrische bzw. elektromagnetische Energieübertragung von der Sendespule 142 auf die (ggf. rotierende) Empfängerspule 141 ermöglicht ist, insbesondere zur elektrischen Energieversorgung der Vibrationseinheit 160 als ein mögliches Ausführungsbeispiel eines elektrischen Verbrauchers.

Hierbei sind die elektrischen Leitungskontakte 151 und 152 auf der der Werkzeugaufnahme 14 abgewandten Seite des Spindelrotors 130 elektrisch mit der Empfängerspule 141 verbunden (Verbindung in Fig. 3 nicht direkt dargestellt)

In besonders bevorzugten Ausführungsbeispielen sind vorzugsweise sowohl die Sendespule 142 als auch die Empfängerspule 141 jeweils als vollumfängliche Spule ausgebildet.

Bei angetriebener Spindel, d.h. bei rotierendem Spindelrotor 130, rotieren die Empfängerspule 141 der Spuleneinheit 140, die Vibrationseinheit 160 mit elektrischen Leitungen 151 und 152 und Hohlschaftelement 150 sowie die Werkzeugaufnahme 14 bei gleicher Drehzahl mit dem Spindelrotor 130 mit, wobei die berührungslose Energieübertragung von der Sendespule 142 (die mit einer externen Energiequelle, bevorzugt mit einer Hochfrequenz-Wechselstromquelle verbunden ist) auf die Empfängerspule 141 ermöglicht ist und damit die Vibrationseinheit 160 angetrieben werden kann bzw. mit elektrischer Energie versorgt werden kann.

Die Vibrationseinheit 160 ist dazu eingerichtet, eine Vibration der Werkzeugaufnahme 14 in axialer Richtung der Spindelvorrichtung 100 anzutreiben, insbesondere bevorzugte eine Vibration mit einer Frequenz im Ultraschallbereich.

Über die beispielhafte Labyrinth-Kopplung 14a ist die Werkzeugaufnahme 14 derart entkoppelt mit dem Spindelrotor 130 verbunden, dass die Werkzeugaufnahme 14 drehfest relativ zu dem Spindelrotor 130 mit dem Spindelrotor 130 rotiert aber entkoppelt von dem Spindelrotor 130 in axialer Richtung vibriert bzw. schwingt.

Zusammenfassend ermöglicht es die vorliegende Erfindung und deren Ausführungsbeispiele vorteilhaft, eine Spindelvorrichtung bereitzustellen, die einen einfachen und kompakten Aufbau ermöglicht und des Weiteren einfach und effizient Werkzeugwechsel ermöglicht, bevorzugt ohne Einbußen im Wirkungsgrad der Energieübertragung zwischen den Spulen in Kauf nehmen zu müssen.

## Patentansprüche

1. Spindelvorrichtung, mit:
- einer Werkzeugaufnahme (14) zur Aufnahme eines Werkzeugs oder einer werkzeugaufnehmenden Werkzeugschnittstelle,
- einem Spindelantrieb umfassend einen Spindelrotor (130) zum rotatorischen Antreiben der Werkzeugaufnahme (14),
- zumindest einem elektrischen Verbraucher (160), der auf der der Werkzeugaufnahme (14) zugewandten Seite des Spindelrotors (130) angeordnet ist, und
- einer Spuleneinheit (140) zur elektrischen Energieversorgung des zumindest einen elektrischen Verbrauchers (160),
wobei die Spuleneinheit (140) auf der der Werkzeugaufnahme (14) abgewandten Seite des Spindelrotors (130) angeordnet ist,
**dadurch gekennzeichnet, dass**
der elektrische Verbraucher (160) eine drehfest an der Werkzeugaufnahme (14) angebrachte Vibrationseinheit aufweist, die dazu eingerichtet ist, eine Vibration der Werkzeugaufnahme (14) in axialer Richtung der Spindelvorrichtung (100), eine Vibration der Werkzeugaufnahme (14) in radialer Richtung der Spindelvorrichtung (100) und/oder eine Vibration der Werkzeugaufnahme (14) in Drehrichtung der Spindelvorrichtung (100) anzutreiben.

2. Spindelvorrichtung gemäß Anspruch 1, **dadurch gekennzeichnet, dass**
die Spuleneinheit (140) eine feststehende Sendespule (142) und eine rotierbar gelagerte Empfängerspule (141) aufweist, insbesondere mit einem zwischen der Sendespule (142) und der Empfängerspule (141) liegenden Spalt zur berührungsglosen Energieübertragung.

3. Spindelvorrichtung gemäß Anspruch 2, **dadurch gekennzeichnet, dass** die Sendespule (142) und die Empfängerspule (141) jeweils als vollumfängliche Spule ausgebildet sind.

4. Spindelvorrichtung gemäß Anspruch 2 oder 3, **dadurch gekennzeichnet, dass**
die rotierbar gelagerte Empfängerspule (141) auf der der Werkzeugaufnahme (14) abgewandten Seite des Spindelrotors (130) an einem Endabschnitt des Spindelrotors (130) angebracht ist.

5. Spindelvorrichtung gemäß einem der Ansprüche 2 bis 4, **dadurch gekennzeichnet, dass**
die feststehende Sendespule (142) an einem den Spindelrotor (130) aufnehmenden Spindelgehäuse (110) angebracht ist.

6. Spindelvorrichtung gemäß einem der Ansprüche 1 bis 5, **dadurch gekennzeichnet, dass**
die Spuleneinheit (140) mittels elektrischer Leitungen (151, 152) mit dem elektrischen Verbraucher (160) verbunden ist.

7. Spindelvorrichtung gemäß Anspruch 6, **dadurch gekennzeichnet, dass**
zumindest ein Abschnitt der elektrischen Leitungen (151, 152) entlang einer Rotationsachse des Spindelrotors (130) von einem Ende des Spindelrotors (130) zum anderen Ende des Spindelrotors (130) axial geführt ist.

8. Spindelvorrichtung gemäß Anspruch 7, **dadurch gekennzeichnet, dass**
der Spindelrotor (130) ein axial angeordnetes Hohlschaftelement (150) aufweist, durch das der zumindest eine Abschnitt der elektrischen Leitungen (151, 152) entlang der Rotationsachse des Spindelrotors (130) axial geführt ist.

9. Spindelvorrichtung gemäß einem der vorhergehenden Ansprüche, **dadurch gekennzeichnet, dass**
der elektrische Verbraucher eine elektronische Messvorrichtung aufweist.

10. Spindelvorrichtung gemäß einem der vorhergehenden Ansprüche, **dadurch gekennzeichnet, dass**
die Vibrationseinheit dazu eingerichtet ist, eine Vibration der Werkzeugaufnahme (14) mit einer Frequenz im Ultraschallbereich anzutreiben.

11. Spindelvorrichtung gemäß einem der vorhergehenden Ansprüche, **dadurch gekennzeichnet, dass**
die Vibrationseinheit (160) einen Piezoaktuator (161; 162; 163; 164) oder eine Mehrzahl von in axialer Richtung hintereinander angeordneten Piezoaktuatoren (161-164) aufweist.

12. Spindelvorrichtung gemäß einem der vorhergehenden Ansprüche, **dadurch gekennzeichnet, dass**
die Werkzeugaufnahme (14) über eine Labyrinth-Kopplung (14a) mit dem Spindelrotor (130) verbunden ist.

13. Spindelvorrichtung gemäß einem der vorhergehenden Ansprüche, **dadurch gekennzeichnet, dass**
die Werkzeugaufnahme (14) dazu eingerichtet ist, ein Werkzeug aufzunehmen, oder
die Werkzeugaufnahme (14) dazu eingerichtet ist, eine auswechselbare Werkzeugschnittstelle aufzunehmen, insbesondere eine Hohlschaftkegel-Werkzeugschnittstelle oder eine Steilkegelschnittstelle.

14. Werkzeugmaschine zum Bearbeiten eines Werkstücks mit einem Werkzeug, mit einer Spindelvorrichtung (100) gemäß einem der vorhergehenden Ansprüche zum Antreiben des an der Werkzeugaufnahme (14) der Spindelvorrichtung (100) aufgenommenen Werkzeugs (15).

## Claims

1. Spindle device, comprising:
- a tool holder (14) for receiving a tool or a tool-receiving tool interface,
- a spindle drive, comprising a spindle rotor (130) for rotationally driving the tool holder (14),
- at least one electrical load (160) arranged on the side of the spindle rotor (130) facing the tool holder (14), and
- a coil unit (140) for supplying electrical energy to the at least one electrical load (160),
wherein the coil unit (140) is arranged on the side of the spindle rotor (130) facing away from the tool holder (14),
**characterized in that**
the electrical load (160) comprises a vibration unit rotationally fixedly attached to the tool holder (14) which is configured to drive a vibration of the tool holder (14) in the axial direction of the spindle device (100), a vibration of the tool holder (14) in the radial direction of the spindle device (100) and/or a vibration of the tool holder (14) in the rotation direction of the spindle device (100).

2. Spindle device according to claim 1, **characterized in that**
the coil unit (140) comprises a fixed emitter coil (142) and a rotatably supported receiver coil (141), particularly with a gap for contactless energy transmission between the emitter coil (142) and the receiver coil (141).

3. Spindle device according to claim 2, **characterized in that** the emitter coil (142) and the receiver coil (141) are formed as a full coil, respectively.

4. Spindle device according to claim 2 or 3, **characterized in that**
the rotatably supported receiver coil (141) is attached to an end portion of the spindle rotor (130) on the side of the spindle rotor (130) facing away from the tool holder (14).

5. Spindle device according to one of the claims 2 to 4, **characterized in that**
the fixed emitter coil (142) is attached to a spindle housing (110) receiving the spindle rotor (130).

6. Spindle device according to one of the claims 1 to 5, **characterized in that**
the coil unit (140) is connected to the electrical load (160) by means of electric lines (151, 152).

7. Spindle device according to claim 6, **characterized in that**
at least one portion of the electric lines (151, 152) is axially led along a rotation axis of the spindle rotor (130) from one end of the spindle rotor (130) to the other end of the spindle rotor (130).

8. Spindle device according to claim 7, **characterized in that**
the spindle rotor (130) comprises an axially arranged hollow shank element (150) through which the at least one portion of the electric lines (151, 152) is axially led along the rotation axis of the spindle rotor (130).

9. Spindle device according to one of the previous claims, **characterized in that**
the electrical load comprises an electronic measurement device.

10. Spindle device according to one of the previous claims, **characterized in that**
the vibration unit is configured to drive a vibration of the tool holder (14) at a frequency in the ultrasonic range.

11. Spindle device according to one of the previous claims, **characterized in that**
the vibration unit (160) comprises a piezo actuator (161; 162; 163; 164) or a plurality of piezo actuators (161-164) arranged in a row in an axial direction.

12. Spindle device according to one of the previous claims, **characterized in that**
the tool holder (14) is connected to the spindle rotor (130) via a labyrinth coupling (14a).

13. Spindle device according to one of the previous claims, **characterized in that**
the tool holder (14) is configured to receive a tool or
the tool holder (14) is configured to receive a replaceable tool interface, especially a hollow-taper-shank tool interface or a steep taper interface.

14. Machine tool for machining a workpiece with a tool, comprising a spindle device (100) according to one of the previous claims for driving the tool (15) received at the tool holder (14) of the spindle device (100).

## Revendications

1. Dispositif à broche, avec
- un porte-outil (14) pour la réception d'un outil ou d'une interface d'outil recevant l'outil,
- un entraînement de broche comprenant un rotor de broche (130) pour l'entraînement en rotation du porte-outil (14),
- au moins un consommateur électrique (160), qui est disposé sur la face du rotor de broche (130) tournée vers le porte-outil (14), et
- une unité bobine (140) pour l'alimentation en énergie électrique du au moins un consommateur électrique (160),
dans lequel l'unité bobine (140) est disposée sur la face du rotor de broche (130) opposée au porte-outil (14),
**caractérisé en ce que**
le consommateur électrique (160) présente une unité vibratoire montée de manière solidaire en rotation sur le porte-outil (14), qui est conçue pour entraîner une vibration du porte-outil (14) dans la direction axiale du dispositif à broche (100), une vibration du porte-outil (14) dans la direction radiale du dispositif à broche (100) et/ou une vibration du porte-outil (14) dans le sens de rotation du dispositif à broche (100).

2. Dispositif à broche selon la revendication 1, **caractérisé en ce que**
l'unité bobine (140) présente une bobine émettrice (142) fixe et une bobine réceptrice (141) montée en rotation, en particulier avec une fente située entre la bobine émettrice (142) et la bobine réceptrice (141) pour la transmission d'énergie sans contact.

3. Dispositif à broche selon la revendication 2, **caractérisé en ce que** la bobine émettrice (142) et la bobine réceptrice (141) sont réalisées respectivement sous la forme d'une bobine intégrale.

4. Dispositif à broche selon la revendication 2 ou 3, **caractérisé en ce que**
la bobine réceptrice (141) montée en rotation est montée sur la face du rotor de broche (130) opposée au porte-outil (14) sur une partie d'extrémité du rotor de broche (130).

5. Dispositif à broche selon l'une quelconque des revendications 2 à 4, **caractérisé en ce que**
la bobine émettrice (142) fixe est montée sur un boîtier de broche (110) recevant le rotor de broche (130).

6. Dispositif à broche selon l'une quelconque des revendications 1 à 5, **caractérisé en ce que**
l'unité bobine (140) est reliée au consommateur électrique (160) au moyen de lignes électriques (151, 152).

7. Dispositif à broche selon la revendication 6, **caractérisé en ce que**
au moins une partie des lignes électriques (151, 152) est guidée axialement le long d'un axe de rotation du rotor de broche (130) à partir d'une extrémité du rotor de broche (130) vers l'autre extrémité du rotor de broche (130).

8. Dispositif à broche selon la revendication 7, **caractérisé en ce que**
le rotor de broche (130) présente un élément tige creuse (150) disposé axialement, par lequel la au moins une partie des lignes électriques (151, 152) est guidée axialement le long de l'axe de rotation du rotor de broche (130).

9. Dispositif à broche selon l'une quelconque des revendications précédentes, **caractérisé en ce que**
le consommateur électrique présente un dispositif de mesure électronique.

10. Dispositif à broche selon l'une quelconque des revendications précédentes, **caractérisé en ce que**
l'unité vibratoire est conçue pour entraîner une vibration du porte-outil (14) avec une fréquence dans le domaine des ultrasons.

11. Dispositif à broche selon l'une quelconque des revendications précédentes, **caractérisé en ce que**
l'unité vibratoire (160) présente un actionneur piézoélectrique (161 ; 162 ; 163 ; 164) ou une pluralité d'actionneurs piézoélectriques (161-164) disposés les uns derrière les autres dans la direction axiale.

12. Dispositif à broche selon l'une quelconque des revendications précédentes, **caractérisé en ce que**
le porte-outil (14) est relié au rotor de broche (130) par l'intermédiaire d'un accouplement à labyrinthe (14a).

13. Dispositif à broche selon l'une quelconque des revendications précédentes, **caractérisé en ce que**
le porte-outil (14) est conçu pour recevoir un outil, ou
le porte-outil (14) est conçu pour recevoir une interface d'outil interchangeable, en particulier une interface d'outil à cône à tige creuse ou une interface d'outil à cône à forte conicité.

14. Machine-outil pour l'usinage d'une pièce avec un outil, avec un dispositif à broche (100) selon l'une quelconque des revendications précédentes pour l'entraînement de l'outil (15) reçu sur le porte-outil (14) du dispositif à broche (100).
